(19) Europäisches Patentamt
European Patent Office
Office européen des brevets

(11) EP 4 560 969 A1

(12) DEMANDE DE BREVET EUROPEEN

(43) Date de publication:
28.05.2025 Bulletin 2025/22

(21) Numéro de dépôt: 24214785.8

(22) Date de dépôt: 22.11.2024

(51) Classification Internationale des Brevets (IPC):
H04L 9/00 (2022.01)    H04L 9/30 (2006.01)

(52) Classification Coopérative des Brevets (CPC):
H04L 9/3093; H04L 9/003; H04L 9/304;
H04L 2209/08

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH MA MD TN

(30) Priorité: 23.11.2023 FR 2312929

(71) Demandeur: THALES
92190 Meudon (FR)

(72) Inventeurs:
• GARRIDO, Eric
92230 GENEVILLIERS (FR)
• ABELARD, Simon
92230 GENEVILLIERS (FR)
• VASSEUR, Valentin
92230 GENEVILLIERS (FR)

(74) Mandataire: Lavoix
2, place d'Estienne d'Orves
75441 Paris Cedex 09 (FR)

(54) **PROCÉDÉ DE DÉCHIFFREMENT D'UN SECRET CHIFFRÉ ET DISPOSITIFS ASSOCIÉS**

(57) La présente invention concerne un procédé de déchiffrement d'un secret chiffré par un mécanisme QC-MDPC, le procédé de déchiffrement étant mis en oeuvre par le récepteur (14) et comprenant :
- la réception d'un polynôme syndrome dérivant du secret,
- la génération d'entiers aléatoires,

- l'application d'opérations respectives sur le premier et le deuxième polynômes creux de la clé privée,
- l'application d'une troisième opération sur le polynôme syndrome,

- la recherche des polynômes d'erreur modifiés tels que la combinaison linéaire des polynômes d'erreur modifiés donne le polynôme syndrome modifié, et
- la déduction du secret partagé par application d'une opération respective sur le premier et le deuxième polynômes d'erreur modifiés,

les cinq opérations dépendant des entiers aléatoires générés et conservant le poids du polynôme sur lequel l'opération est appliquée.

FIG.1

Processed by Luminess, 75001 PARIS (FR)

EP 4 560 969 A1

## Description

La présente invention concerne un procédé de déchiffrement d'un secret chiffré par un mécanisme cryptographique asymétrique d'encapsulation de clé à base de code correcteur de contrôle de parité quasi-cyclique à densité modérée. L'invention se rapporte aussi à un dispositif de chiffrement, un récepteur et un système de communication associés.

Dans le cadre de la préparation à l'apparition des ordinateurs quantiques, de nombreux mécanismes cryptographiques dit « post-quantiques » sont développés.

Un mécanisme cryptographique post-quantique est un algorithme construit comme étant plus robuste d'un point de vue algorithmique à l'utilisation d'un ordinateur quantique par rapport à un algorithme dit classique.

C'est notamment le cas du mécanisme d'encapsulation de clé à retournement de bits.

Un tel mécanisme est plus souvent désigné sous l'appellation algorithme BIKE.

L'abréviation BIKE renvoie à la dénomination anglaise correspondante de *« Bit Flipping Key Encapsulation ».*

Toutefois, un attaquant peut également avoir accès à des grandeurs physiques du système physique mettant en oeuvre un tel algorithme cryptographique. Le temps de calcul, la quantité de rayonnement thermique, la quantité de rayonnement électromagnétique et la consommation sont des exemples de telles grandeurs physiques.

Par cet accès, l'attaquant peut récupérer des informations secrètes échangées par utilisation du mécanisme cryptographique même si l'algorithme n'est pas cassé au sens algorithmique du terme.

Une telle attaque est dénommée attaque par canaux auxiliaires ou attaque SCA, l'abréviation SCA renvoyant alors à la dénomination anglaise correspondante de « *Side Channel Attack ».*

Il est donc souhaitable de rendre les algorithmes post-quantiques insensibles à des attaques par canaux auxiliaires.

Pour cela, il est possible d'appliquer une approche consistant à décomposer le calcul effectué par l'algorithme post-quantiques en opérations élémentaires. Les opérations élémentaires sont ici des additions, des multiplications, des opérations logiques « ET », « OU » et « OU EXCLUSIF » (plus souvent dénommées selon les dénominations anglaise correspondantes d'opérations « AND », « OR » et « XOR »).

Puis, les opérations élémentaires sont protégées par des techniques de masquage. Une multiplication masquée, une somme masquée et une comparaison masquée sont des exemples de techniques de masquage.

Pour assurer une bonne sécurité, une telle approche est mise en oeuvre pour chaque opération élémentaire, ce qui rend l'approche fastidieuse et très impactante sur la performance de mise en oeuvre de l'algorithme. Typiquement, le temps de mise en oeuvre est 15 à 30 fois plus long avec l'utilisation d'une telle approche.

Il existe donc un besoin pour un procédé de déchiffrement d'un secret chiffré par un algorithme cryptographique post-quantique qui soit robuste aux attaques par canaux auxiliaires présentant un meilleur temps de mise en oeuvre.

A cet effet, la description décrit un procédé de déchiffrement d'un secret chiffré par un mécanisme cryptographique asymétrique d'encapsulation de clé à base de code correcteur de contrôle de parité quasi-cyclique à densité modérée, le mécanisme cryptographique utilisant une clé privée formée par deux polynômes creux, le procédé de déchiffrement étant mis en oeuvre par un récepteur et comprenant :

- la réception d'un polynôme syndrome dérivant du secret,
- la génération d'entiers aléatoires,
- l'application d'une première opération sur le premier polynôme creux de la clé privée, pour obtenir un premier polynôme creux modifié,
- l'application d'une deuxième opération sur le deuxième polynôme creux formant la clé privée, pour obtenir un deuxième polynôme creux modifié formant avec le premier polynôme creux modifié, une clé privée modifiée,
- l'application d'une troisième opération sur le polynôme syndrome pour obtenir un polynôme syndrome modifié à déchiffrer,
- la recherche des polynômes d'erreur modifiés tels que la combinaison linéaire des polynômes d'erreur modifiés par la clé privée modifiée donne le polynôme syndrome modifié à déchiffrer, et
- la déduction du secret partagé par application d'une quatrième opération sur le premier polynôme d'erreur modifié et d'une cinquième opération sur le deuxième polynôme d'erreur modifié,

les cinq opérations dépendant des entiers aléatoires générés et conservant le poids du polynôme sur lequel l'opération est appliquée, le poids d'un polynôme étant le nombre de coefficients non nuls du polynôme.

Selon des modes de réalisation particuliers, le procédé de déchiffrement présente une ou plusieurs des caractéristiques suivantes, prise(s) isolément ou selon toutes les combinaisons techniquement possibles :

- le polynôme syndrome est généré à partir des deux polynômes creux, d'un premier polynôme d'erreur, et d'un deuxième polynôme d'erreur, et les cinq opérations se compensent de sorte que le premier polynôme d'erreur résulte de l'application de la quatrième opération sur le premier polynôme d'erreur modifié, et que le deuxième polynôme d'erreur résulte de l'application de la cinquième opération sur le deuxième polynôme d'erreur modifiée.

- chacune des cinq opérations est la même fonction paramétrée par au moins un entier, au moins un entier paramétrant la fonction dépendant d'au moins un entier aléatoire généré.
- au moins un entier paramétrant la fonction est spécifique à chaque opération.
- au moins deux entiers paramétrant la fonction sont des combinaisons linéaires de deux entiers aléatoires générés.
- chacune des opérations associe à un polynôme $P(X)$, le polynôme modifié $P(X)*X^T$ modulo $X^{T+1}$ $-1$, le polynôme et le polynôme modifié ayant un degré inférieur ou égal à d, r et d étant des entiers.
- chacune des opérations associe à un polynôme $P(X)$ constitué de monômes $a_k X^k$, k étant inférieur ou égal au degré du polynôme $P(X)$, le polynôme modifié $P'(X)$ constitué des monômes $a_{k *} X^{((k*a) \bmod r)}$, T et r étant des entiers non nuls.- le mécanisme cryptographique est un algorithme d'encapsulation de clé à retournement de bits.
- lors de l'étape de génération, trois entiers uniquement sont générés

La description décrit aussi un dispositif de déchiffrement d'un secret chiffré par un mécanisme cryptographique asymétrique d'encapsulation de clé à base de code correcteur de contrôle de parité quasi-cyclique à densité modérée, le mécanisme cryptographique utilisant une clé privée formée par deux polynômes creux, un récepteur étant propre à recevoir un polynôme syndrome dérivant du secret, le dispositif de déchiffrement étant propre à :

- générer des entiers aléatoires,
- appliquer une première opération sur le premier polynôme creux de la clé privée, pour obtenir un premier polynôme creux modifie,
- appliquer une deuxième opération sur le deuxième polynôme creux formant la clé privée, pour obtenir un deuxième polynôme creux modifié formant avec le premier polynôme creux modifié, une clé privée modifiée,
- appliquer une troisième opération sur le polynôme syndrome pour obtenir un polynôme syndrome modifié à déchiffrer,
- rechercher des polynômes d'erreur modifiés tels que la combinaison linéaire des polynômes d'erreur modifiés par la clé privée modifiée donne le polynôme syndrome modifié à déchiffrer, et
- déduire secret partagé par application d'une quatrième opération sur le premier polynôme d'erreur modifié et d'une cinquième opération sur le deuxième polynôme d'erreur modifié,

les cinq opérations dépendant des entiers aléatoires générés et conservant le poids du polynôme sur lequel l'opération est appliquée, le poids d'un polynôme étant le nombre de coefficients non nuls du polynôme.

La description propose également un récepteur propre à recevoir un polynôme syndrome dérivant d'un secret chiffré par un mécanisme cryptographique asymétrique d'encapsulation de clé à base de code correcteur de contrôle de parité quasi-cyclique à densité modérée, le mécanisme cryptographique utilisant une clé privée formée par deux polynômes creux, le récepteur comprenant un dispositif de déchiffrement.

La description propose également un système de communication comportant :

- un émetteur propre à chiffrer un secret par un mécanisme cryptographique asymétrique d'encapsulation de clé à base de code correcteur de contrôle de parité quasi-cyclique à densité modérée, le mécanisme cryptographique utilisant une clé privée formée par deux polynômes creux, l'émetteur étant propre à envoyer un polynôme syndrome dérivant du secret, et
- un récepteur tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un système de communication, et
- la figure 2 est un ordinogramme d'un exemple de mise en oeuvre d'un procédé de déchiffrement d'un secret chiffré par un mécanisme cryptographique asymétrique d'encapsulation de clé à base de code correcteur de contrôle de parité quasi-cyclique à densité modérée.

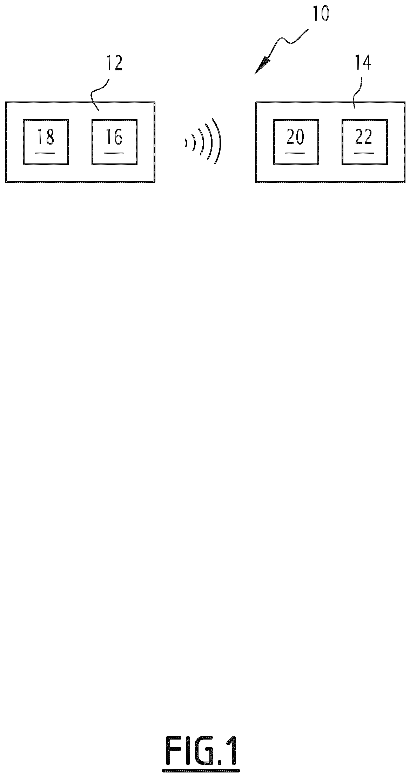

Un système de communication 10 est représenté schématiquement sur la figure 1.

Le système de communication 10 comporte un émetteur 12 et un récepteur 14.

Le système de communication 10 vise à assurer une communication entre l'émetteur 12 et le récepteur 14, par exemple une communication par satellite.

L'émetteur 12 comporte une antenne d'émission 16 et un dispositif de chiffrement 18.

L'antenne d'émission 16 est propre à émettre des informations à destination d'autres antennes.

Le dispositif de chiffrement 18 est propre à chiffrer des messages par mise en oeuvre d'un mécanisme cryptographique.

Le mécanisme cryptographique est un algorithme cryptographique asymétrique d'encapsulation de clé.

Un tel mécanisme cryptographique est souvent désigné sous l'appellation KEM, cette abréviation renvoyant à la dénomination anglaise correspondante de « Key Encapsulation Mechanism ».

Dans le présent exemple, le mécanisme cryptographique est un algorithme post-quantique, c'est-à-dire qu'il est construit comme étant plus robuste à l'utilisation d'un ordinateur quantique par rapport à un algorithme dit classique.

Plus précisément, le mécanisme cryptographique est un algorithme à base de code correcteur de contrôle de parité quasi-cyclique à densité modérée.

Un tel code correcteur est plus souvent désigné par l'expression code correcteur QC-MDPC. L'abréviation QC-MDPC renvoie à la dénomination anglaise correspondante de *« Quasi-Cyclic Moderate Density Parity Check »*.

Selon l'exemple décrit, le mécanisme cryptographique est un algorithme d'encapsulation de clé utilisant un algorithme de décodage à retournement de bits (algorithme BIKE comme indiqué précédemment).

Le dispositif de chiffrement 18 utilise une clé privée formée par deux polynômes creux notés h1 et h2.

Chacun des polynômes creux h1 et h2 est un polynômes sur GF(2).

GF(2) désigne un corps de Galois d'ordre 2, c'est-à-dire un corps fini comprenant deux éléments. La notation $\mathbb{F}_2$ est parfois utilisé pour désigner ce corps.

Ces polynômes h1 et h2 sont des polynômes creux modulo $X^T-1$.

Un polynôme creux est polynôme dont la majorité des coefficients sont nuls. A titre d'ordre de grandeur, pour un polynôme de l'ordre de 10000 coefficients, seule une centaine de coefficients seraient égaux à 1.

T est un entier supérieur à 10000, de sorte que les polynômes constituant les clés privée et publique sont de taille supérieure à 10000 bits.

De préférence, l'entier T est choisi pour correspondre à un niveau de sécurité AES.

L'abréviation AES renvoie ici à la dénomination anglaise correspondante de « Advanced Encryption Standard » souvent traduit par « norme de chiffrement avancé ».

A titre d'exemple spécifique, il sera choisi un entier T égal à 12323 bits pour un niveau de sécurité AES 128, un entier T égal à 24659 bits pour un niveau de sécurité AES 192 et un entier T égal à 40973 bits pour un niveau de sécurité AES 256.

Chaque polynôme creux h1 et h2 est ainsi un polynôme à coefficients sur {0,1} et présentant un poids faible.

Le poids d'un polynôme est le nombre de coefficients non nuls du polynôme. Un poids est considéré comme faible lorsque le poids est supérieur ou égal à 100 et inférieur ou égal à 300.

La clé privée est connue du récepteur 14.

Le récepteur 14 comporte une antenne de réception 20 et un dispositif de déchiffrement 22.

L'antenne de réception 20 est propre à recevoir des informations provenant d'autres antennes, et notamment de l'antenne d'émission 16.

Le dispositif de déchiffrement 22 est une unité de traitement d'informations formée par exemple d'une mémoire et d'un processeur associé à la mémoire.

La mémoire du dispositif de déchiffrement 22 est alors apte à stocker un logiciel de déchiffrement.

En variante non représentée, le dispositif de déchiffrement 22 est réalisée chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit).*

Lorsque le dispositif de déchiffrement 22 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Les mêmes remarques s'appliquent pour le dispositif de chiffrement 18

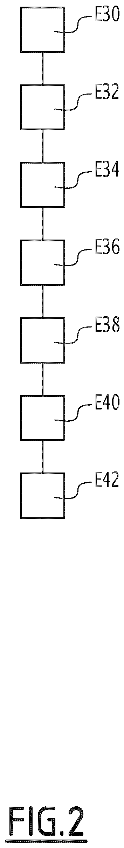

Le fonctionnement du dispositif de déchiffrement 22 est maintenant décrit en référence à la figure 2 est un ordinogramme illustrant un exemple de mise en oeuvre d'un procédé de déchiffrement d'un secret.

Il est supposé qu'une clé privée est connue du récepteur 14, de sorte que les polynômes creux h1 et h2 sont connus du dispositif de déchiffrement 22.

Il est supposé que le dispositif de chiffrement 18 a accès à une clé publique, qui dérive des deux polynômes creux h1 et h2.

Par ailleurs, l'émetteur 12 souhaite échanger un secret avec le récepteur 14.

Suivant la spécification du KEM BIKE, le processus d'encapsulation consiste à générer aléatoirement un motif d'erreur décrit par un premier polynôme d'erreur e1 et un deuxième polynôme d'erreur e2, dont on déduit une clé de session secrète ainsi qu'un chiffré envoyé au récepteur 14. Cette opération décrite dans la spécification de BIKE fait intervenir des fonctions de hachage.

Les deux polynômes d'erreur e1 et e2 sont des polynômes sur GF(2) modulo $X^T-1$.

A partir des polynômes d'erreur e1 et e2 et des polynômes creux h1 et h2, l'émetteur 12 calcule un polynôme syndrome S selon la formule mathématique suivante :

$$S = e1 * h1 + e2 * h2$$

Le procédé de déchiffrement comprend une étape de réception E30, une étape de génération E32, une première étape d'application E34, une deuxième étape d'application E36, une troisième étape d'application E38, une étape de recherche E40 et une étape de déduction E42.

Lors de l'étape de réception E30, le récepteur 14 reçoit le polynôme syndrome S dérivant du secret.

Lors de l'étape de génération E32, le dispositif de déchiffrement 22 génère des entiers aléatoires.

Selon l'exemple décrit, le dispositif de déchiffrement 22 tire trois entiers aléatoires r1, r2 et r3 dans l'intervalle [0, ..., T-1].

Le tirage est ici équiprobable.

Lors de la première étape d'application E34, le dispositif de déchiffrement 22 applique une première opération O1 sur le premier polynôme creux h1.

Le résultat de la première opération O1 est un premier polynôme creux modifié h1'. Cela s'écrit mathématiquement comme :

$$h1' = O1(h1)$$

Dans l'exemple décrit, la première opération O1 est une opération de « rotation cyclique ». Une telle opération d'écrit :

$$P >>> r = P(X) * X^r [modulo \ X^T - 1]$$

Où :

- P désigne un polynôme,
- >>> illustre l'opération de rotation cyclique,
- r désigne un entier paramétrant l'opération,
- X la variable dont dépend le polynôme, et
- * désigne la multiplication.

Dans le cas de la première opération O1, l'entier paramétrant l'opération est (r3-r1) modulo T, de sorte que la première opération O1 s'écrit avec les notations précédentes :

$$O1(h1) = h1 >>> \big((r3 - r1)modulo \ T\big)$$

Lors de la deuxième étape d'application E36, le dispositif de déchiffrement 22 applique une deuxième opération O2 sur le deuxième polynôme creux h2.

Le résultat de la deuxième opération O2 est un deuxième polynôme creux modifié h2'. Cela s'écrit mathématiquement comme :

$$h2' = O2(h2)$$

La deuxième opération O2 est également une opération de « rotation cyclique », l'entier paramétrant l'opération étant différent puisqu'il s'agit de (r3 + r2) modulo T. La deuxième opération O2 s'écrit ainsi avec les notations précédentes :

$$O2(h2) = h2 >>> \big((r3 + \ r2)modulo \ T\big)$$

L'ensemble du premier polynôme creux modifié h1' et du deuxième polynôme creux modifié h2' forme une clé privée modifiée.

Lors de la troisième étape d'application E38, le dispositif de déchiffrement 22 applique une troisième opération O3 sur le polynôme syndrome S.

Le résultat de la troisième opération O3 est un polynôme syndrome modifié S'. Cela s'écrit mathématiquement comme :

$$S' = O3(S)$$

La troisième opération O3 est également une opération de « rotation cyclique », l'entier paramétrant l'opération étant différent puisqu'il s'agit de r3. La troisième opération O3 s'écrit ainsi avec les notations précédentes :

$$O3(S) = S >>> r3$$

Le polynôme syndrome modifié S' obtenu à l'issue de la troisième étape d'application E38 est le polynôme à déchiffrer.

Pour cela, lors de l'étape de recherche E40, le dispositif de déchiffrement 22 recherche un premier polynôme d'erreur modifié e1' et un deuxième polynôme modifié e2' vérifiant une condition dépendant du polynôme syndrome modifié S'.

Selon l'exemple décrit, la condition est que la combinaison linéaire des polynômes d'erreur modifiés e1' et e2' par la clé privée modifiée donne le polynôme syndrome modifié S'. Cela correspond à l'équation suivante :

$$e1' * h1 + e2' * h2 = S'$$

Le dispositif de déchiffrement 22 en résolvant cette équation obtient le premier polynôme d'erreur modifié e1' et le deuxième polynôme modifié e2'.

Lors de l'étape de déduction E42, le dispositif de déchiffrement 22 déduit le secret partagé.

Pour cela, le dispositif de déchiffrement 22 applique une quatrième opération O4 sur le premier polynôme d'erreur modifié e1'.

La quatrième opération O4 est paramétrée pour compenser le résultat des opérations précédentes.

Le résultat de cette quatrième opération O4 est le premier polynôme d'erreur e1, ce qui s'écrit mathématiquement :

$$e1 = O4(e1')$$

La quatrième opération O4 est également une opération de « rotation cyclique », l'entier paramétrant l'opération étant différent puisqu'il s'agit de r1. La quatrième opération O4 s'écrit ainsi avec les notations précédentes :

$$O4(e1') = e1' >>> r1$$

Le dispositif de déchiffrement 22 applique également une cinquième opération O5 sur le deuxième polynôme d'erreur modifié e2'.

La cinquième opération O5 est paramétrée pour compenser le résultat des opérations précédentes.

Le résultat de cette cinquième opération O5 est le deuxième polynôme d'erreur e2, ce qui s'écrit mathématiquement :

$$e2 = O5(e2')$$

La cinquième opération O5 est également une opération de « rotation cyclique », l'entier paramétrant l'opération étant différent puisqu'il s'agit de r2. La cinquième opération O5 s'écrit ainsi avec les notations précédentes :

$$O5(e2') = e2' >>> r2$$

Le dispositif de déchiffrement 22 récupère ainsi le motif d'erreur initial, lui donnant accès au secret partagé entre l'émetteur 12 et le récepteur 14.

Le procédé mis en oeuvre par le dispositif de déchiffrement 22 change aléatoirement la représentation des longs vecteurs en entrée et en sortie de l'algorithme de décodage par la modification de cinq opérations.

Le procédé de déchiffrement constitue ainsi une contre-mesure aux attaques par canaux auxiliaires mise en oeuvre sur un algorithme post-quantique d'échange de clé (ici un algorithme de type BIKE).

Le procédé permet aussi de conserver le même mécanisme de décodage que dans l'algorithme BIKE original.

Il en résulte que le procédé décrit préserve les performances et l'interopérabilité avec d'autres implémentations de l'algorithme BIKE.

Par ailleurs, le procédé n'implique pas de modifier la mise en oeuvre physique de l'algorithme BIKE, la charge calculatoire additionnelle étant faible.

Le procédé peut être mise en oeuvre pour tout niveau de sécurité de l'algorithme BIKE.

Le procédé apporte le meilleur compromis entre une bonne performance de mise en oeuvre et un bon niveau de sécurité.

En l'espèce, le bon niveau de sécurité correspond à une bonne résistance aux attaques par canaux auxiliaires.

D'autres modes de réalisation sont envisageables.

En particulier, le procédé peut utiliser des opérations différentes.

Plus spécifiquement, chaque opération dépend d'au moins un entier aléatoire généré et conserve le poids du polynôme sur lequel l'opération est appliquée.

De préférence, comme c'est le cas ici, chacune des cinq opérations est la même fonction paramétrée par au moins un entier aléatoirement généré. La rotation cyclique n'est qu'un exemple particulier de fonction pouvant être utilisée ici.

En outre, au moins un entier paramétrant la fonction étant spécifique à chaque opération.

Pour améliorer la sécurité, au moins deux entiers paramétrant la fonction sont des combinaisons linéaires de deux entiers aléatoires générés.

Par ailleurs, il est possible de mettre en oeuvre les étapes précitées dans un ordre différent ou simultanément, selon la mise en oeuvre la plus favorable dans le cas d'espèce considéré.

Un autre exemple de mise en oeuvre d'un procédé de déchiffrement d'un secret va maintenant être décrit.

Dans cet autre exemple, les cinq opérations appliquées diffèrent de ce qui a été décrit précédemment.

On définit une opération de rotation notée $g_d$ qui associe à un polynôme P(X) un polynôme modifié P'(X). L'opération $g_d$ associe à chaque monôme $X^k$, avec k inférieur ou égal au degré du polynôme P(X), le monôme $X^{((k*d) \text{ modulo } T)}$, avec un a un entier non nul et d un entier paramétrant la fonction.

Lors de l'étape de génération E32, le dispositif de déchiffrement 22 génère un entier aléatoire non nul a, l'entier a étant choisi dans l'intervalle [1, ..., T-1].

L'opération O1 appliquée à l'étape E34 s'écrit :

$$O1(h1) = g_a(h1)$$

Dans cet exemple de réalisation, les opérations O1, O2 et O3 sont paramétrées de la même manière, c'est-à-dire :

$$O2(h2) = g_a(h2)$$

Et :

$$O3(S) = g_a(S)$$

La première opération O1 appliquée à l'étape E34, la deuxième opération O2 appliquée à l'étape E36, et la troisième opération O3 appliquée à l'étape E38 associent donc à chaque monôme Xdu premier polynôme creux h1, du deuxième polynôme creux h2, et du syndrome S respectivement le monôme $X^{((k*a) \text{ modulo } r)}$.

La quatrième opération O4 appliquée par le dispositif de déchiffrement 22 sur le premier polynôme d'erreur modifié e1' s'écrit :

$$O4(e1') = g_{a^{-1}}(e1')$$

Avec $a^{-1}$ l'inverse modulaire de a pour la multiplication modulo T, qui satisfait la relation :

$$a^{-1} * a = 1 \,[modulo\ T]$$

La cinquième opération O5 appliquée par le dispositif de déchiffrement 22 sur le deuxième polynôme d'erreur modifié e2' s'écrit :

$$O5(e2') = g_{a^{-1}}(e2')$$

La quatrième opération O4 et la cinquième opération O5 appliquées par le dispositif de déchiffrement 22 sur le premier polynôme d'erreur modifié e1' et le deuxième polynôme d'erreur modifié e2' respectivement associent donc à chaque monôme $X^k$, du premier polynôme d'erreur modifiée e1' et du deuxième polynôme d'erreur modifié e2' le monôme $X^{((k*\frac{1}{a})\ modulo\ r)}$.

Par ailleurs, il est possible de mettre en oeuvre les étapes précitées dans un ordre différent ou simultanément, selon la mise en oeuvre la plus favorable dans le cas d'espèce considéré.

**Revendications**

1. Procédé de déchiffrement d'un secret chiffré par un mécanisme cryptographique asymétrique d'encapsulation de clé à base de code correcteur de contrôle de parité quasi-cyclique à densité modérée, le mécanisme cryptographique utilisant une clé privée formée par deux polynômes creux (h1, h2), le procédé de déchiffrement étant mis en oeuvre par un récepteur (14) et comprenant :

   - la réception d'un polynôme syndrome (S) dérivant du secret,
   - la génération d'entiers aléatoires,
   - l'application d'une première opération sur le premier polynôme creux (h1) de la clé privée, pour obtenir un premier polynôme creux modifié (h1'),
   - l'application d'une deuxième opération sur le deuxième polynôme creux (h2) formant la clé privée, pour obtenir un deuxième polynôme creux modifié (h2') formant avec le premier polynôme creux modifié (h1'), une clé privée modifiée (h1', h2'),
   - l'application d'une troisième opération sur le polynôme syndrome (S) pour obtenir un polynôme syndrome modifié (S') à déchiffrer,
   - la recherche des polynômes d'erreur modifiés (e1', e2') tels que la combinaison linéaire des polynômes d'erreur modifiés (e1', e2') par la clé privée modifiée (h1', h2') donne le polynôme syndrome modifié (S') à déchiffrer, et
   - la déduction du secret partagé par application d'une quatrième opération sur le premier polynôme d'erreur modifié (e1') et d'une cinquième opération sur le deuxième polynôme d'erreur modifié (e2'),

les cinq opérations dépendant des entiers aléatoires générés et conservant le poids du polynôme sur lequel l'opération est appliquée, le poids d'un polynôme étant le nombre de coefficients non nuls du polynôme.

2. Procédé de déchiffrement selon la revendication 1, dans lequel le polynôme syndrome est généré à partir des deux polynômes creux (h1, h2), d'un premier polynôme d'erreur (e1), et d'un deuxième polynôme d'erreur (e2), et dans lequel les cinq opérations se compensent de sorte que le premier polynôme d'erreur (e1) résulte de l'application de la quatrième opération sur le premier polynôme d'erreur modifié (e1'), et que le deuxième polynôme d'erreur (e2) résulte de l'application de la cinquième opération sur le deuxième polynôme d'erreur modifiée (e2').

3. Procédé de déchiffrement selon la revendication 1 ou 2, dans lequel chacune des cinq opérations est la même fonction paramétrée par au moins un entier, au moins un entier paramétrant la fonction dépendant d'au moins un entier aléatoire généré.

4. Procédé de déchiffrement selon la revendication 3, dans lequel au moins un entier paramétrant la fonction est spécifique à chaque opération.

5. Procédé de déchiffrement selon la revendication 3 ou 4, dans lequel au moins deux entiers paramétrant la fonction sont des combinaisons linéaires de deux entiers aléatoires générés.

6. Procédé de déchiffrement selon l'une quelconque des revendications 1 à 5, dans lequel chacune des opérations associe à un polynôme P(X), le polynôme modifié $P(X)*X^r$ modulo $X^{T+1}$ -1, le polynôme et le polynôme modifié ayant un degré inférieur ou égal à T, r et T étant des entiers.

7. Procédé de déchiffrement selon l'une quelconque des revendications 1 à 3, dans lequel chacune des opérations associe à un polynôme P(X) constitué de monômes $X^k$, k étant inférieur ou égal au degré du polynôme P(X), le polynôme modifié P'(X) constitué des monômes $X^{((k*a) \bmod r)}$, a et r étant des entiers non nuls.

8.  Procédé de déchiffrement selon l'une quelconque des revendications 1 à 7, dans lequel le mécanisme cryptographique est un algorithme d'encapsulation de clé à retournement de bits.

9.  Procédé de déchiffrement selon l'une quelconque des revendications 1 à 8, dans lequel, lors de l'étape de génération, trois entiers uniquement sont générés.

10. Dispositif de déchiffrement (22) d'un secret chiffré par un mécanisme cryptographique asymétrique d'encapsulation de clé à base de code correcteur de contrôle de parité quasi-cyclique à densité modérée, le mécanisme cryptographique utilisant une clé privée formée par deux polynômes creux (h1, h2) dont fait partie le dispositif de déchiffrement (22), un récepteur (14) étant propre à recevoir un polynôme syndrome (S) dérivant du secret, le dispositif de déchiffrement (22) étant propre à :

    - générer des entiers aléatoires,
    - appliquer une première opération sur le premier polynôme creux (h1) de la clé privée, pour obtenir un premier polynôme creux modifié (h1'),
    - appliquer une deuxième opération sur le deuxième polynôme creux (h2) formant la clé privée, pour obtenir un deuxième polynôme creux modifié (h2') formant avec le premier polynôme creux modifié (h1'), une clé privée modifiée (h1', h2'),
    - appliquer une troisième opération sur le polynôme syndrome (S) pour obtenir un polynôme syndrome modifié (S') à déchiffrer,
    - rechercher des polynômes d'erreur modifiés (e1', e2') tels que la combinaison linéaire des polynômes d'erreur modifiés (e1', e2') par la clé privée modifiée (h1', h2') donne le polynôme syndrome modifié (S') à déchiffrer, et
    - déduire secret partagé par application d'une quatrième opération sur le premier polynôme d'erreur modifié (e1') et d'une cinquième opération sur le deuxième polynôme d'erreur modifié (e2'),

    les cinq opérations dépendant des entiers aléatoires générés et conservant le poids du polynôme sur lequel l'opération est appliquée, le poids d'un polynôme étant le nombre de coefficients non nuls du polynôme.

11. Récepteur (14) propre à recevoir un polynôme syndrome (S) dérivant d'un secret chiffré par un mécanisme cryptographique asymétrique d'encapsulation de clé à base de code correcteur de contrôle de parité quasi-cyclique à densité modérée, le mécanisme cryptographique utilisant une clé privée formée par deux polynômes creux (h1, h2) et étant connue du récepteur (14), le récepteur (14) comprenant un dispositif de déchiffrement (22) selon la revendication 10

12. Système de communication (10) comportant :

    - un émetteur (12) propre à chiffrer un secret par un mécanisme cryptographique asymétrique d'encapsulation de clé à base de code correcteur de contrôle de parité quasi-cyclique à densité modérée, le mécanisme cryptographique utilisant une clé privée formée par deux polynômes creux (h1, h2), l'émetteur (12) étant propre à envoyer un polynôme syndrome (S) dérivant du secret, et
    - un récepteur (14) selon la revendication 11.

FIG.1

E30

E32

E34

E36

E38

E40

E42

FIG.2

Europäisches
Patentamt

European
Patent Office

Office européen
des brevets

**RAPPORT DE RECHERCHE EUROPEENNE**

Numéro de la demande

EP 24 21 4785

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHEN CONG ET AL: "Masking Large Keys in Hardware: A Masked Implementation of McEliece",<br>12 août 2015 (2015-08-12), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 293 - 309, XP047359179,<br>ISBN: 978-3-540-74549-5<br>* sections 2.1, 2.2 and 4 *<br>----- | 1-5,8, 10-12 | INV.<br>H04L9/00<br>H04L9/30 |
| Y,D | Aragon Nicolas ET AL: "BIKE: Bit Flipping Key Encapsulation. Round 4 Submission",<br>,<br>10 octobre 2022 (2022-10-10), pages 1-51, XP093186449,<br>Extrait de l'Internet:<br>URL:https://bikesuite.org/files/v5.0/BIKE_Spec.2022.10.10.1.pdf<br>* title, sections 1.1, 2.2 and 2.3 *<br>----- | 1-12 | |
| Y | BETTALE LUK ET AL: "Security Assessment of NTRU Against Non-Profiled SCA",<br>29 janvier 2023 (2023-01-29), 20230129, PAGE(S) 248 - 268, XP047647763,<br>* abrégé *<br>* title, sections 2.1 and 2.3 *<br>----- | 1-12 | DOMAINES TECHNIQUES RECHERCHES (IPC)<br><br>H04L |

Le présent rapport a été établi pour toutes les revendications

| Lieu de la recherche | Date d'achèvement de la recherche | Examinateur |
|---|---|---|
| Munich | 11 avril 2025 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)